# EUROPEAN PATENT APPLICATION

(11) **EP 3 182 238 A1**
(43) Date of publication of application: **21.06.2017**
(21) Application number: 15747083.2
(22) Date of filing: 04.02.2015
(51) Int. Cl.: G05B 19/418

(54) **INTELLIGENT HOME SYSTEM AND CONTROL METHOD**

(30) Priority: 13.08.2014 CN 201410396608
(71) Applicant: Huizhou TCL Mobile Communication Co., Ltd., Hui Zhou Guangdong 516006 (CN)
(72) Inventor: YANG, Yan, Huizhou Guangdong 516006 (CN)
(74) Representative: Petraz, Gilberto Luigi
(86) International application number: PCT/CN2015/072212
(87) International publication number: WO 2016/023346

(57) **Abstract**

A control method of an intelligent home includes: A: collecting operation and utilization information of home appliances by the user, recording it as operation habits and storing them in a default database; B: looking up the database to determine whether there is a second operation recorded in an operation habit of a first operation correspondingly when detecting that the user performs the first operation to a home appliance; and C: automatically performing the second operation in the operation habits of the user to home control the home appliance when the second operation is found in the database correspondingly. The present invention makes the intellectual home more humane, intelligent and energy-saving.

## Description

### BACKGROUND OF THE INVENTION

### 1. Field of the Invention

The present invention relates to an intelligent home area, more particularly, to an intelligent home system and a control method thereof.

### 2. Description of the Related Art

An intelligent home is to connect together a variety of appliances and other controllers (such as audio and video equipment, lighting system, curtain controller, air conditioning controller, security system, digital theater system, network appliance, and device for recording three ammeters, etc.) in the home through Internet of Things technology. In this manner, various functions and means including home appliance control, lighting control, curtain control, telephone remote control, indoor and outdoor remote control, anti-theft alarm, environmental monitoring, HVAC control, infrared repeating and programmable timing control, are provided.

As compared with a common home, not only does an intelligent home have the traditional residential function, but it is also a highly efficient, comfortable, safe, convenient and environmentally friendly living environment that is not only a building but is also equipped with network communications, information appliances, automation equipment and integrates system, structure, service, and management together so as to provide a full information exchange function. The intelligent home helps families exchange information with external contacts smoothly, optimizes people's living style, helps people arrange time effectively, enhances the home life security, and even saves money previously spent on a variety of energy costs.

However, users are required by themselves to operate switches of intelligent home systems according to the prior art, a small part of intelligent homes that perform switching controls through devices such as sensors often misjudge users' intentions, thus resulting in wrong operations to cause great inconvenience to users.

It is therefore very important to provide an intelligent home system and a control method thereof to resolve the above-mentioned technical problems.

### SUMMARY OF THE INVENTION

It is an objective of the present invention to provide an intelligent home system and a control method thereof to resolve the problem that the conventional intelligent home system cannot realize automatic control of switches.

The technical solution according the present invention is as follows:
A control method of an intelligent home comprises:
   S: providing a user with an interface configured to receive a collection time slot and a collection period of a database set by the user in advance;
      A: collecting operation and utilization information of home appliances by the user during the collection time slot of the collection period, recording it as operation habits and storing them in a default database;
      B: looking up the database to determine whether there is a second operation recorded in an operation habit of a first operation correspondingly when detecting that the user performs the first operation to a home appliance; and
      C: automatically performing the second operation in the operation habits of the user to home control the home appliance when the second operation is found in the database correspondingly, wherein when a plurality of second operations are recorded in the operation habits in the operation time slot in the database correspondingly, the plurality of second operations are automatically performed sequentially in chronological order, or the plurality of second operations are automatically performed in accordance with numbers of occurrences of the second operations sequentially from most to least.

Furthermore, step A comprises:
A1: recording current operations of the user and an operation time slot in which the operations occur when the user performs operations to the home appliances during the set collection time slot of the set collection period; and
A2: determining whether a record of the operation exists in the operation time slot in the database, if yes, adding a number of occurrences of the operation to one, otherwise, establishing a new record of the operation to record the number of occurrences of the operation.

Furthermore, the following step is further comprised after step A2:
A3: sorting the operations occurring in the collection time slot in the database in accordance with the numbers of occurrences of the operations after the collection period is over, and recording one or more of the operations having the number of occurrences reaching a threshold value as operation habits of the user corresponding to the operation time slot.

Furthermore, step A3 comprises:
setting one or more of the operations in the operation habits as the first operation, determining whether an operation is the first operation when the user performs the operation to the home appliance, if yes, going to step B.

A control method of an intelligent home comprises:
A: collecting operation and utilization information of home appliances by the user, recording it as operation habits and storing them in a default database;
B: looking up the database to determine whether there is a second operation recorded in an operation habit of a first operation correspondingly when detecting that the user performs the first operation to a home appliance; and
C: automatically performing the second operation in the operation habits of the user to home control the home appliance when the second operation is found in the database correspondingly.

Furthermore, before the step A, the method further comprising:
S: setting to receive a collection time slot and a collection period of a database set by the user in advance.

Furthermore, step A comprises:
A1: recording current operations of the user and an operation time slot in which the operations occur when the user performs operations to the home appliances during the set collection time slot of the set collection period; and
A2: determining whether a record of the operation exists in the operation time slot in the database, if yes, adding a number of occurrences of the operation to one, otherwise, establishing a new record of the operation to record the number of occurrences of the operation.

Furthermore, the following step is further comprised after step A2:
A3: sorting the operations occurring in the collection time slot in the database in accordance with the numbers of occurrences of the operations after the collection period is over, and recording one or more of the operations having the number of occurrences reaching a threshold value as operation habits of the user corresponding to the operation time slot.

Furthermore, step A3 comprises:
setting one or more of the operations in the operation habits as the first operation, determining whether an operation is the first operation when the user performs the operation to the home appliance, if yes, going to step B.

Furthermore, when a plurality of second operations are recorded in the operation habits in the operation time slot in the database correspondingly, the plurality of second operations are automatically performed sequentially in chronological order, or the plurality of second operations are automatically performed in accordance with numbers of occurrences of the second operations sequentially from most to least.

An intelligent home system comprises:
a database learning module configured to collect operation and utilization information of home appliances by a user, record it as operation habits and store them in a default database;
a lookup module configured to lookup the database
to determine whether there is a second operation recorded in an operation habit of a first operation correspondingly when detecting that the user performs the first operation to a home appliance;
an automatic control module configured to automatically perform the second operation in the operation habits of the user to home control the home appliance when the second operation is found in the database correspondingly.

Furthermore, the intelligent home system further comprises a pre-setting module configured to set a collection time and a collection period of the database in advance.

Furthermore, the database learning module comprises:
a recording unit configured to record current operations of the user and an operation time slot in which the operations occur when the user performs operations to the home appliances during the collection time slot of the collection period; and
an update unit configured to determine whether a record of the operation exists in the operation time slot in the database, if yes, a number of occurrences of the operation being added to one, otherwise, a new record of the operation being established to record the number of occurrences of the operation.

Furthermore, the database learning module further comprises:
a habitual operation acquisition unit configured to sort the operations occurring in the collection time slot in the database in accordance with the numbers of occurrences of the operations, and record one or more of the operations having the number of occurrences reaching a threshold value as operation habits of the user in the operation time slot correspondingly after the collection period is over.

In summary, the present invention collects and records the habits of utilizing the intelligent home appliances by the user. When the user performs the first operation, the database is looked up based on the first operation to find an operation to which the user is accustomed, that is, the second operation, in the database so as to perform the habitual operation(s) of the user. The present invention combines the utilization habits and utilization frequencies of the intelligent home by the user to automatically control intellectual home. As a result, the intellectual home is more humane, intelligent and energy-saving.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
Fig. 1 is a flow chart of a control method of an intelligent home according to a preferred embodiment of the present invention
Fig. 2 is a detailed flow chart of step 101 of the method shown in Fig. 1.

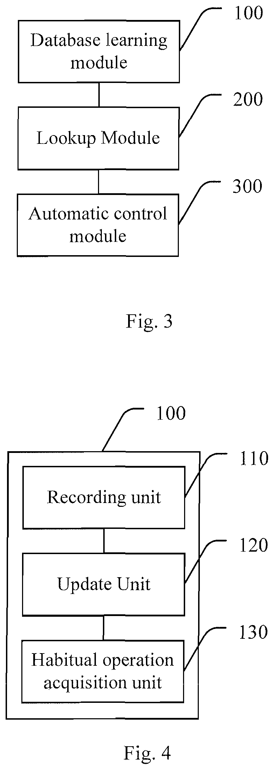

Fig. 3 is a structural block diagram of an intelligent home system according to a preferred embodiment of the present invention.
Fig. 4 is a structural block diagram of the database learning module in the system shown in Fig. 3 in detail.

### DESCRIPTION OF THE EMBODIMENTS

In order to illustrate the technique and effects of the present invention, a detailed description will be disclosed by the following disclosure in conjunction with figures. It is noted that the same components are labeled by the same number.

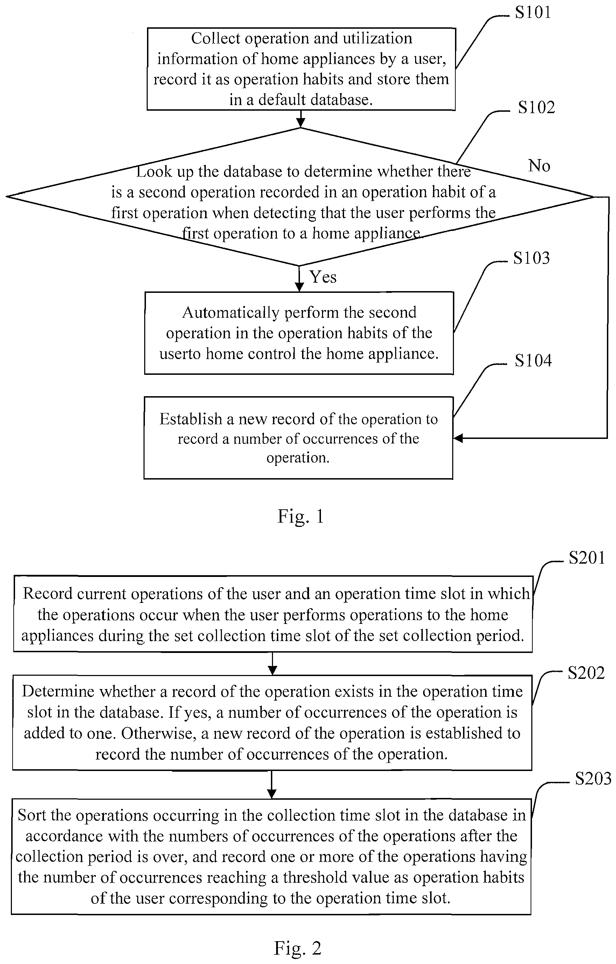

Refer to Fig. 1, Fig. 1 is a flow chart of a control method of an intelligent home according to a preferred embodiment of the present invention. The control method of the intelligent home comprises the steps of:
S101: collecting operation and utilization information of home appliances by a user, recording it as operation habits and storing them in a default database;
S102: looking up the database to determine whether there is a second operation recorded in an operation habit of a first operation when detecting that the user performs the first operation to a home appliance;
S103: automatically performing the second operation in the operation habits of the user to home control the home appliance when the second operation is found in the database correspondingly.

In the present embodiment, through colleting and recording utilization habit information of the user to operate the home appliances, habits of the user to perform operations to the home appliances are controlled. When the user performs the first operation to the home appliance, the database is looked up to determine whether there is the second operation in the operation habit of the first operation. If there is, a home control is performed to the home appliance according to the second operation in the operation habits of the user. Through the present invention, once the user performs the specific first operation, the home system will look up the database to determine whether there is the second operation in the operation habit of the first operation when the user performs the home control. If the second operation is found, the home appliance is controlled according to an operation to which the user is accustomed, that is, the second operation. Such a control method not only does not require the manual operation by the user, but also decreases the probability of misjudgment. The home control is thus more humane, intelligent and energy-saving.

To serve as a more preferred embodiment of the present invention, the control method of the intelligent home further comprises the following step before step 101:
S100: pre-setting a collection time slot and a collection period of the database;

In greater detail, an interface may be provided to the user so that the user sets the collection time slot and the collection period of the database. For example, the collection time slot is set to be from 8:15 to12:00. The collection period may be set from Monday to Friday, a week, or a month. In this manner, the home system will collect operations during the collection time slot of the collection period to obtain the database of operations performed to the home appliances by the user so as to facilitate the subsequent control of the home appliance(s) based on the database.

The collection period and the collection time slot may be set by the user or may be default values of the system. Setting of the collection period and the collection time slot may be turned off by the user, that is, not to set the collection period and the collection time slot. In greater detail, the interface for turning off the setting of the collection period and the collection time slot may be provided to the user, and the user decides whether to turn off the interface for setting.

After setting the collection period and the collection time slot, each of the operations performed by the user during the collection time slot of the collection period can be collected and recorded to form the database of the user during the collection time slot of the collection period.

The present invention operation refers to operations performed to home appliances in the home system, such as watching TV, turning off air conditioner, closing the window, closing the door, turning off water and electricity, turning off the gas, sitting on the sofa (via the sensing of sensor), etc. The conventional intelligent home system is able to connect together a variety of home appliances in the home through Internet of Things technology, the present invention thus combines with the conventional intelligent home system to collect and record the utilization habits of the user to operate the home appliance so as to realize the automatic control of intelligent home.

To serve as a more preferred embodiment of the present invention, step S101 specifically comprises:
S201: recording current operations of the user and an operation time slot in which the operations occur when the user performs operations to the home appliances during the set collection time slot of the set collection period;

During the collection period, the user first determines whether the operations occur in the collection slot when performing the operations. If not, no recording is necessary. If yes, recoding the current operations by the user and the operation time slot in which the operations occur. An operation time slot may be set in advance, the operations in the operation time slot represent the utilization habits of the user in a time slot. For example, the user selects to close the window, turn off the gas, turn off water and electricity, and go out in a specific operation time slot. Hence, the collection time slot is divided into several operation time slots when recording. The operations performed in the operation time slot are generally concentrated, that is, related to one another, which represent the utilization habits of the user. The operation time slot may be set by the user. For example, set the operation time slot to be from 8:10 to8:20. The operations performed by user may be closing the window, turning off the gas, turning off water and electricity, and going out. Hence, when recording, not only are the operations recorded, but the operation time slot in which the operations occur is also recorded. The operation time slot may be learned by the system, that is, the system determines that the occurrences of the operations are more concentrated in a specific time slot. The specific time slot is thus set to be the operation time slot. A duration of the operation time slot may be longer or shorter.

S202: determining whether a record of the operation exists in the operation time slot in the database. If yes, a number of occurrences of the operation is added to one. Otherwise, a new record of the operation is established to record the number of occurrences of the operation.

After the user performs a specific operation and records the operation and the operation time slot in which the operation occurs, whether the operation has been recorded in the operation time slot can be looked up in the database. If yes, the number of occurrences of the operation is added to one to update data in the database. If not, the new record of the operation is established to record the number of occurrences of the operation. For example, an initial value is one. Then, whenever the operation in the same operation time slot is recorded the next time, the number of occurrences of the operation is added to one, that is, is updated to two.

For example, the user watches hourly news at home at 12 o'clock on Saturday, then the user's current operation is recorded as watching TV. The operation time slot is from 11:30 to 12:30. After that, the database is looked up to determine whether an operation of watching TV is in the operation time slot. If yes, the number of occurrences of the operation is added to one. Otherwise, the new record is established to record the number of occurrences of the operation of watching TV in the operation time slot.

To serve as a more preferred embodiment of the present invention, the control method of the intelligent home further comprises the following step after step 202:
S203: sorting the operations occurring in the collection time slot in the database in accordance with the numbers of occurrences of the operations after the collection period is over, and recording one or more of the operations having the number of occurrences reaching a threshold value as operation habits of the user corresponding to the operation time slot.

After the collection period is over, each of the operations in the collection time slot in the database can be sorted, that is, sorted in accordance with occurrence frequencies of the operations to record the one or more of the operations having the number of occurrences reaching the threshold value as the operation habits of the user in the corresponding operation time slot. In other words, the step is to analyze the habits of the user based on the operations stored in the database and to learn the operation habits of the user so as to obtain the operation habits in a specific operation timeslot. For example, during the collection period from Monday to Friday and in the operation time slot of 8:10 to 8:20, the operations ranking high and having the number of occurrences reaching the threshold value are closing the door, turning off the gas, turning off water and electricity, closing the window in sequence. These operations can thus be recorded as the operation habits of the user. Or, during several collection periods which is from Saturday to Sunday and in the operation time slot of 11:30 to 12:30, the operations ranking high and having the number of occurrences reaching the threshold value are sitting on the sofa, watching TV, turning on air conditioner in sequence. These operations are recorded as the operation habits of the user.

In this manner, when the user performs a specific operation, such as sitting on the sofa, the present invention home system will automatically turn on the TV, turn on air conditioner so as to provide the user with faster and more intelligent home enjoyment, after the collection period is over. Or, when the user closes the door, it is regarded that the user has gone out. Since the operation habits in the operation timeslot corresponding the operation are turning off the gas, turning off water and electricity and closing the window, the above habitual operations can be performed to ensure that gas, water and electricity at home are turned off and the window in the home is closed after detecting that the user has gone out.

To serve as a more preferred embodiment of the present invention, the step S203 further comprises:
setting one or more of the operations in the operation habits as the first operation, determining whether an operation is the first operation when the user performs the operation to the home appliance, if yes, going to step S102.

In order to more accurately control the home appliances, a more preferred embodiment according to the present invention is to select one or several of the operations in the operation habits as the first operation. Hence, after the user performs the first operation, the control method of the intelligent home goes to step S102 directly to look up whether there is the second operation. If yes, the second operation is found in the database. The second operation is then performed. The advantage of setting the first operation is that only when the first operation is detected will the second operation in the operation habits, that is, the operations in the operation habits except for the first operation, be performed. For example, only when an operation of closing the door is detected will whether the window is closed and whether the gas, water and electricity are turned off be checked. When any other operation is performed, the second operation will not be performed. For example, when the gas is turned off, the water and electricity will not turned off and the window will not be closed. This determination is based on the operation habits and the utilization habits of the user. Only when an operation of going out occurs will the window be closed and the gas, water and electricity be turned off. Similarly, an operation of sitting on the sofa may be set as the first operation, only when the user sits on the sofa will the second operation, such as turning on the TV and turning on air conditioner, be performed. Or, turning on the TV may be set as the first operation. When the TV is turned on, the second operation of turning on air conditioner is performed. Hence, through setting the first operation, the present invention is able to automatically control the home system more accurately so as to avoid the occurrences of wrong operations.

To serve as a more preferred embodiment of the present invention, step S103 specifically comprises:
when a plurality of second operations are recorded in the operation habits in the operation time slot in the database correspondingly, the plurality of second operations being automatically performed sequentially in chronological order, or the plurality of second operations being automatically performed in accordance with numbers of occurrences of the second operations sequentially from most to least.

When the plurality of second operations are recorded in the operation habits in a specific operation time slot correspondingly, the second operations can be performed in accordance with the above two methods. For example, the second operations can be automatically performed sequentially in chronological order, that is, according to the operation habits of the user. Or, the second operations can be automatically performed in accordance with the numbers of occurrences of the second operations sequentially from most to least so as to ensure that the most operation is performed earlier.

Based on the above control method, the present invention further provides an intelligent home system. As shown in the figure, the intelligent home system comprises:
a database learning module 100 configured to collect operation and utilization information of home appliances by a user, record it as operation habits and store them in a default database;
a lookup module 200 configured to lookup the database
to determine whether there is a second operation recorded in an operation habit of a first operation when detecting that the user performs the first operation to a home appliance;
an automatic control module 300 configured to automatically perform the second operation in the operation habits of the user to home control the home appliance when the second operation is found in the database correspondingly.

In greater detail, the system further comprises:
a pre-setting module 101 configured to set a collection time slot and a collection period of the database in advance.

In greater detail, the database learning module 100 specifically comprises:
a recording unit 110 configured to record current operations of the user and an operation time slot in which the operations occur when the user performs operations to the home appliances during the collection time slot of the collection period;
an update unit 120 configured to determine whether a record of the operation exists in the operation time slot in the database. If yes, a number of occurrences of the operation is added to one. Otherwise, a new record of the operation is established to record the number of occurrences of the operation.

In greater detail, the database learning module 100 further comprises:
a habitual operation acquisition unit 130 configured to sort the operations occurring in the collection time slot in the database in accordance with the numbers of occurrences of the operations, and record one or more of the operations having the number of occurrences reaching a threshold value as operation habits of the user in the operation time slot correspondingly after the collection period is over.

Since technical details of the above modules and units have been provided in the description of the above method, a further description is not provided.

In summary, the present invention collects and records the habits of utilizing the intelligent home appliances by the user. When the user performs the first operation, the database is looked up based on the first operation to find an operation to which the user is accustomed, that is, the second operation, in the database so as to perform the habitual operation(s) of the user. The present invention combines the utilization habits and utilization frequencies of the user to automatically control intellectual home. As a result, the intellectual home is more humane, intelligent and energy-saving.

The present disclosure is described in detail in accordance with the above contents with the specific preferred examples. However, this present disclosure is not limited to the specific examples. For the ordinary technical personnel of the technical field of the present disclosure, on the premise of keeping the conception of the present disclosure, the technical personnel can also make simple deductions or replacements, and all of which should be considered to belong to the protection scope of the present disclosure.

## Claims

1. A control method of an intelligent home comprising:
S: providing a user with an interface configured to receive a collection time slot and a collection period of a database set by the user in advance;
A: collecting operation and utilization information of home appliances by the user during the collection time slot of the collection period, recording it as operation habits and storing them in a default database;
B: looking up the database to determine whether there is a second operation recorded in an operation habit of a first operation correspondingly when detecting that the user performs the first operation to a home appliance; and
C: automatically performing the second operation in the operation habits of the user to home control the home appliance when the second operation is found in the database correspondingly, wherein when a plurality of second operations are recorded in the operation habits in the operation time slot in the database correspondingly, the plurality of second operations are automatically performed sequentially in chronological order, or the plurality of second operations are automatically performed in accordance with numbers of occurrences of the second operations sequentially from most to least.

2. The control method of the intelligent home as claimed in claim 1, wherein step A comprises:
A1: recording current operations of the user and an operation time slot in which the operations occur when the user performs operations to the home appliances during the set collection time slot of the set collection period; and
A2: determining whether a record of the operation exists in the operation time slot in the database, if yes, adding a number of occurrences of the operation to one, otherwise, establishing a new record of the operation to record the number of occurrences of the operation.

3. The control method of the intelligent home as claimed in claim 2, wherein the following step is further comprised after step A2:
A3: sorting the operations occurring in the collection time slot in the database in accordance with the numbers of occurrences of the operations after the collection period is over, and recording one or more of the operations having the number of occurrences reaching a threshold value as operation habits of the user corresponding to the operation time slot.

4. The control method of the intelligent home as claimed in claim 3, wherein step A3 comprises:
setting one or more of the operations in the operation habits as the first operation, determining whether an operation is the first operation when the user performs the operation to the home appliance, if yes, going to step B.

5. A control method of an intelligent home comprising:
A: collecting operation and utilization information of home appliances by the user, recording it as operation habits and storing them in a default database;
B: looking up the database to determine whether there is a second operation recorded in an operation habit of a first operation correspondingly when detecting that the user performs the first operation to a home appliance; and
C: automatically performing the second operation in the operation habits of the user to home control the home appliance when the second operation is found in the database correspondingly.

6. The control method of the intelligent home as claimed in claim 5, before the step A, the method further comprising:
S: setting to receive a collection time slot and a collection period of a database set by the user in advance.

7. The control method of the intelligent home as claimed in claim 6, wherein step A comprises:
A1: recording current operations of the user and an operation time slot in which the operations occur when the user performs operations to the home appliances during the set collection time slot of the set collection period; and
A2: determining whether a record of the operation exists in the operation time slot in the database, if yes, adding a number of occurrences of the operation to one, otherwise, establishing a new record of the operation to record the number of occurrences of the operation.

8. The control method of the intelligent home as claimed in claim 7, wherein the following step is further comprised after step A2:
A3: sorting the operations occurring in the collection time slot in the database in accordance with the numbers of occurrences of the operations after the collection period is over, and recording one or more of the operations having the number of occurrences reaching a threshold value as operation habits of the user corresponding to the operation time slot.

9. The control method of the intelligent home as claimed in claim 8, wherein step A3 comprises:
setting one or more of the operations in the operation habits as the first operation, determining whether an operation is the first operation when the user performs the operation to the home appliance, if yes, going to step B.

10. The control method of the intelligent home as claimed in claim 5, wherein when a plurality of second operations are recorded in the operation habits in the operation time slot in the database correspondingly, the plurality of second operations are automatically performed sequentially in chronological order, or the plurality of second operations are automatically performed in accordance with numbers of occurrences of the second operations sequentially from most to least.

11. An intelligent home system comprising:
a database learning module configured to collect operation and utilization information of home appliances by a user, record it as operation habits and store them in a default database;
a lookup module configured to lookup the database
to determine whether there is a second operation recorded in an operation habit of a first operation correspondingly when detecting that the user performs the first operation to a home appliance;
an automatic control module configured to automatically perform the second operation in the operation habits of the user to home control the home appliance when the second operation is found in the database correspondingly.

12. The intelligent home system as claimed in claim 11, further comprising:
a pre-setting module configured to set a collection time and a collection period of the database in advance.

13. The intelligent home system as claimed in claim 12, wherein the database learning module comprises:
a recording unit configured to record current operations of the user and an operation time slot in which the operations occur when the user performs operations to the home appliances during the collection time slot of the collection period; and
an update unit configured to determine whether a record of the operation exists in the operation time slot in the database, if yes, a number of occurrences of the operation being added to one, otherwise, a new record of the operation being established to record the number of occurrences of the operation.

14. The intelligent home system as claimed in claim 13, wherein the database learning module further comprises:
a habitual operation acquisition unit configured to sort the operations occurring in the collection time slot in the database in accordance with the numbers of occurrences of the operations, and record one or more of the operations having the number of occurrences reaching a threshold value as operation habits of the user in the operation time slot correspondingly after the collection period is over.
